# EUROPÄISCHE PATENTANMELDUNG

(11) **EP 1 773 057 A1**
(43) Veröffentlichungstag der Anmeldung: **11.04.2007**
(21) Anmeldenummer: 06019011.3
(22) Anmeldetag: 12.09.2006
(51) Int. Cl.: H04N 7/18, G06T 7/20, A63B 71/06

(54) **Verfahren zur Verfolgung eines Spielelements sowie eine Vorrichtung zur Durchführung des Verfahrens**

(30) Priorität: 08.10.2005 DE 102005048276
(71) Anmelder: Oppermann, Knut, 34260 Kaufungen (DE); Markert, Jörg, 34379 Calden (DE); Eiser, Markus, 34295 Edermünde-Haldorf (DE)
(72) Erfinder: Oppermann, Knut, 34260 Kaufungen (DE); Markert, Jörg, 34379 Calden (DE); Eiser, Markus, 34295 Edermünde-Haldorf (DE)
(74) Vertreter: WALTHER, WALTHER & HINZ Patentanwälte - European Patent Attorneys

(57) **Zusammenfassung**

Gegenstand der Erfindung ist ein Verfahren und eine Vorrichtung zur Verfolgung eines Spielelementes (20), z. B. eines Balles oder eines Pucks, auf einem Spielfeld (1) mit Hilfe mehrerer das Spielfeld (1) in seiner Gesamtheit erfassenden Kameras (10), wobei durch mindestens eine Kamera (10) mindestens ein bestimmter Sektor (2) des Spielfeldes (1) erfassbar ist, wobei eine Auswerteeinrichtung vorgesehen ist, wobei die Auswerteeinrichtung eine Erkennungseinrichtung zur Erkennung des Spielelementes (20) durch die Kameras (10) aufweist, wobei durch die Auswerteeinrichtung der Weg des Spielelementes (20) innerhalb des von einer Kamera (10) betrachteten Sektors (2) oder der von mehreren Kameras (10) betrachteten mehreren Sektoren ermittelt wird und diese Sektoren gespeichert werden, wobei dann, wenn das Spielelement (20) auf einen oder mehrere bestimmte von einer Kamera oder mehreren Kameras (10) erfasste und definierte Zielsektoren trifft, durch die Auswerteeinheit der Sektor des Spielelementes (20) ermittelt wird, an dem das Spielelement (20) auf seinem Weg vor Erreichen des Zielsektors eine Richtungsänderung erfahren hat, wobei dann durch die Auswerteeinheit ein Signal an eine optische und/oder akustische Anzeigeeinrichtung übermittelt wird.

## Beschreibung

Die vorliegende Erfindung betrifft sowohl ein Verfahren zur Verfolgung eines Spielelementes, z. B. eines Balles oder eines Pucks, auf einem Spielfeld als auch eine Vorrichtung zur Durchführung eines solchen Verfahrens.

Ein Fußballfeld hat eine Größe von etwa 105 x 33 m, wobei zu beiden Enden der sogenannte Torraum, also der Raum, der durch das Tor abgedeckt ist, hinzukommt. Auf dem Spielfeld agieren 22 Spieler, die versuchen, den Ball als Spielelement in das jeweils gegnerische Tor zu befördern. Hierzu sind oftmals eine Vielzahl von Spielzügen erforderlich, um schlussendlich den Ball in das gegnerische Tor zu leiten.

Aus der DE 697 13 039 T2 ist ein Verfahren zur Verfolgung eines Spielelementes, z. B. eines Balles, auf einem Spielfeld mit Hilfe mehrerer das Spielfeld in seiner Gesamtheit erfassenden Kameras bekannt. Hierbei ist durch mindestens eine Kamera mindestens ein bestimmter Sektor des Spielfeldes erfassbar, wobei eine Auswerteeinrichtung vorgesehen ist, die eine Erkennungseinrichtung zur Erkennung des Spielelementes durch die mindestens eine Kamera aufweist. Durch die Auswerteeinheit wird der Weg des Spielelementes innerhalb des von einer Kamera betrachteten Sektors oder der von mehreren Kameras betrachteten mehreren Sektoren ermittelt.

Aus der US 2003/0142238 A1 ist des Weiteren bekannt, ein Auslöse-Ereignis bei einer Sportveranstaltung, wie z. B. einen Torschuss in einem Zielsektor, zu ermitteln, um dann durch eine Auswerteeinheit ein Signal an eine optische und/oder akustische Anzeigeeinrichtung zu übermitteln.

Viele Sportarten, und hier insbesondere Fußball aber auch Eishockey, finanzieren sich im Wesentlichen durch Sponsoren oder Werbung, die einen erheblichen Teil der Einnahmen ausmachen. Sowohl die Sponsoren als auch die Werbung erfolgt beispielsweise als Bandenwerbung oder auch auf den Trikots der einzelnen Spieler. Da die Aufrechterhaltung des Spielbetriebes für einen Verein mit dem Einsatz nicht unerheblicher finanzieller Mittel verbunden ist, wird nach immer neuen Einnahmequellen gesucht. Eine Möglichkeit der Erzielung von Einnahmen besteht nun darin, dass in Abhängigkeit von dem Ort auf dem Spielfeld, an dem ein Spieler eine bestimmte Aktion durchführt, die zu einem Ergebnis auf Grund dieser Spielhandlung mündet, also ein Tor fällt oder ein Freistoß erfolgt, auf einer Anzeigetafel der Name eines bestimmten Sponsors oder eine bestimmte Werbung dargestellt wird. Eine solche Anzeige könnte manuell aktiviert werden, es besteht allerdings auch die Möglichkeit der quasi automatischen Aktivierung einer derartigen Anzeige eines Sponsors oder einer Werbung auf einer Anzeigetafel.

Gegenstand der Erfindung ist nunmehr ein Verfahren zur automatischen Anzeige dann, wenn die Handlung eines Spielers mit dem Spielelement, also beispielsweise dem Ball oder dem Puck, zu einem bestimmten Spielergebnis führt, also beispielsweise, wenn beim Fußball ein Tor fällt oder ein Freistoß erfolgt.

Ein solches Verfahren zur Verfolgung des Spielelements mit dem finalen Ziel der Erzeugung beispielsweise einer Anzeige auf einer Anzeigetafel zeichnet sich durch eine Vielzahl der das Spielfeld in seiner Gesamtheit erfassenden Kameras aus, wobei durch mindestens eine Kamera mindestens ein bestimmter Sektor des Spielfeldes erfassbar ist, wobei eine Auswerteeinrichtung vorgesehen ist, wobei die Auswerteeinrichtung eine Erkennungseinrichtung zur Erkennung des Spielelementes durch die Kameras aufweist, wobei die Auswerteeinrichtung den Weg des Spielelementes innerhalb des von einer Kamera betrachteten Sektors oder von mehreren Kameras betrachteten mehreren solcher Sektoren ermittelt und diese Sektoren speichert, wobei dann, wenn das Spielelement auf eine oder mehrere bestimmte von einer Kamera oder mehreren Kameras erfasste und definierte Zielsektoren trifft, durch die Auswerteeinrichtung der Sektor des Spielelementes ermittelt wird, an dem das Spielelement auf seinem Weg vor Erreichen des Zielsektors eine Richtungsänderung erfahren hat, wobei dann durch die Auswerteeinrichtung ein Signal an eine optische und/oder akustische Anzeigeeinrichtung übermittelt wird.

Hieraus wird deutlich, dass durch die Kameras das Spielfeld in einzelne bestimmte Sektoren unterteilt wird. Das heißt, dass jede Kamera einen bestimmten Sektor betrachtet. Gelangt das Spielelement von einem anderen bestimmten Sektor des Spielfeldes in diesen von dieser bestimmten Kamera betrachteten bestimmten Sektor, so wird durch die Auswerteeinrichtung der Weg des Spielelementes über diese Sektoren ermittelt, und zwar immer von dem Ort der letzten Richtungsänderung bis zum Ort der nächsten Richtungsänderung, wobei dann, wenn das Spielelement nach der letzten Richtungsänderung in einen ebenfalls von einer oder mehreren Kameras erfassten definierten Zielsektor trifft, also beispielsweise den Torraum, ermittelt wird, von welchem Sektor mit letzter Richtungsänderung auf dem Spielfeld das Spielelement in den Torraum gelangt ist. Es besteht nun die Möglichkeit, die einzelnen Sektoren des Spielfeldes an Sponsoren zu vermieten oder zu verpachten, die dann die Möglichkeit haben, wenn eben von diesem bestimmten Sektor aus ein Spielzug erfolgte, der zu einem Tor führte, beispielsweise eine bestimmte Werbung zu zeigen, oder aber den Namen des Sponsors zu nennen. Das heißt, es besteht die Möglichkeit zu eruieren, von wo aus beispielsweise der Torschuss erfolgt ist, um dann dem Sponsor oder Mieter dieses bestimmten Sektors auf dem Spielfeld die Möglichkeit beispielsweise für eine Werbemaßnahme zu eröffnen.

Es besteht allerdings nicht nur die Möglichkeit, quasi den Ort oder den Sektor der letzten Richtungsänderung des Spielelementes zu ermitteln, um in Abhängigkeit von dem Sektor, auf dem diese letzte Richtungsänderung des Spielelementes stattgefunden hat, beispielsweise die entsprechende Werbemaßnahme zu schalten, sondern es besteht vielmehr auch die Möglichkeit, den Sektor, von wo die vorletzte oder vorvorletzte Richtungsänderung des Spielelementes erfolgt ist, bevor beispielsweise ein Tor oder ein Freistoß gefallen ist, zu ermitteln, um dann diesen Sponsor dieses bestimmten Sektors zu der Werbemaßnahme zu verhelfen. Dies deshalb, weil ansonsten die Gefahr besteht, dass nur die unmittelbar dem Tor benachbarten bestimmten Sektoren des Spielfeldes zu vermieten sind.

Nach einem weiteren Merkmal der Erfindung ist vorgesehen, dass die von den Kameras betrachteten Sektoren des Spielfeldes einander überlappen. Das heißt, dass die zueinander benachbarten Kameras im übertragenen Sinne das Spielelement einander übergeben, so dass keine freien Sektoren entstehen, seien diese auch noch so klein.

Nach einem besonderen Merkmal der Erfindung ist weiterhin vorgesehen, dass die zu einem bestimmten Sektor benachbarte Kamera das Spielelement zusätzlich zu dieser dem bestimmten Sektor zugeordneten Kamera erfasst. Das bedeutet nichts anderes, als dass durch die benachbarte Kamera das Spielelement nicht von oben erfasst wird, sondern von der Seite. Hierdurch ergibt sich folgender Vorteil:

Wird beispielsweise beim Fußball der Ball in gerader Richtung auf das Tor geschossen, trifft der Ball aber unmittelbar vor Erreichen der Torlinie noch einmal auf dem Spielfeld auf, um dann hinter die Torlinie zu gelangen, dann stellt dies eine Richtungsänderung in vertikaler Richtung dar, die das Auslösen der zuvor beschriebenen Werbemaßnahmen erforderlich machen könnte. Wie bereits erläutert wird bei einem geraden Schuss, wenn die Kamera den Ball genau senkrecht erfasst, diese kaum ermitteln, dass dieser Ball während seiner Flugbahn einmal den Boden berührt, um dann wieder abzuspringen. Durch die erfindungsgemäße Maßnahme, wonach beispielsweise der Ball immer auch seitlich erfasst wird, besteht nunmehr die Möglichkeit, auch Richtungsänderungen in vertikaler Richtung zu erfassen und einem bestimmten Sektor auf dem Spielfeld zuzuordnen.

Gegenstand der Erfindung ist ebenfalls eine Vorrichtung zur Durchführung des Verfahrens gemäß einem oder mehreren der zuvor abgehandelten Merkmale. Die Vorrichtung zeichnet sich durch eine Mehrzahl von über dem Spielfeld angeordnete Kameras aus, wobei durch die Mehrzahl der Kameras das gesamte Spielfeld erfassbar ist sowie eine Auswerteeinrichtung, die mit den Kameras in Verbindung steht sowie eine optische und/oder akustische Anzeigeeinrichtung, die mit der Auswerteeinheit in Verbindung steht. Das bedeutet, dass das Spielfeld von rasterförmig angeordneten Kameras überdeckt ist, deren Erfassungsfelder einander im Randbereich überlappen

Nach einem weiteren Merkmal der Vorrichtung ist vorgesehen, dass die Kameras schwenkbar sind; dies - wie bereits zuvor erläutert - vor dem Hintergrund, dass sowohl die eine senkrecht über dem bestimmten Sektor stehende Kamera das Spielelement, also beispielsweise den Ball erfasst, als auch die dem benachbarten bestimmten Sektor zugeordnete Kamera. Dies deshalb, um auch vertikale Richtungsänderungen des Spielelementes ermitteln zu können.

Anhand der Zeichnungen wird das Verfahren sowie auch die Vorrichtung beispielhaft näher erläutert.
- Figur 1: zeigt ein Spielfeld aufgeteilt in eine Vielzahl von Sektoren;
- Figur 2: zeigt eine Seitenansicht auf ein Spielfeld mit darüber angeordneten Kameras;
- Figur 3: zeigt schematisch die Verschaltung der Kameras über die Auswerteeinrichtung mit der Anzeigetafel.

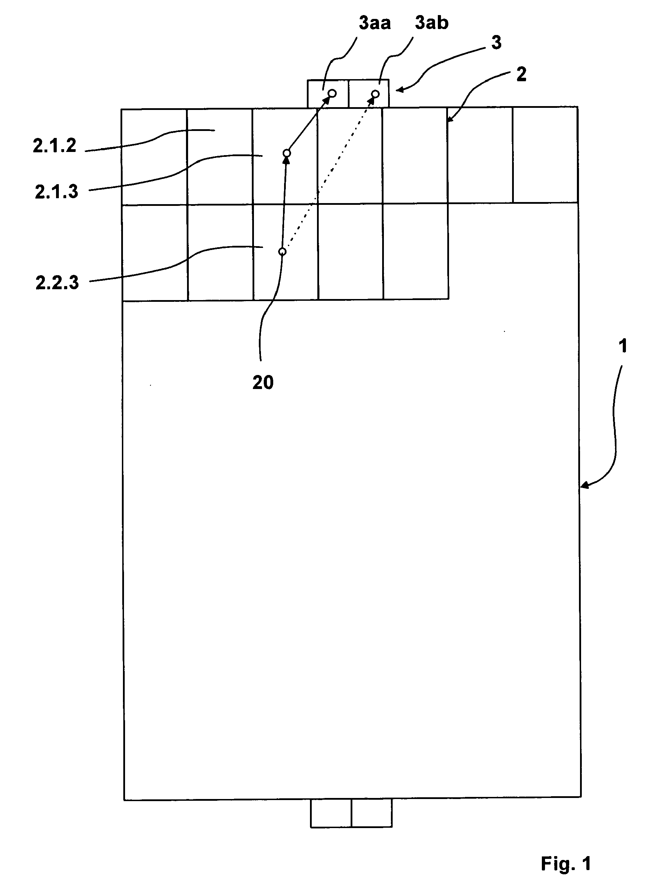

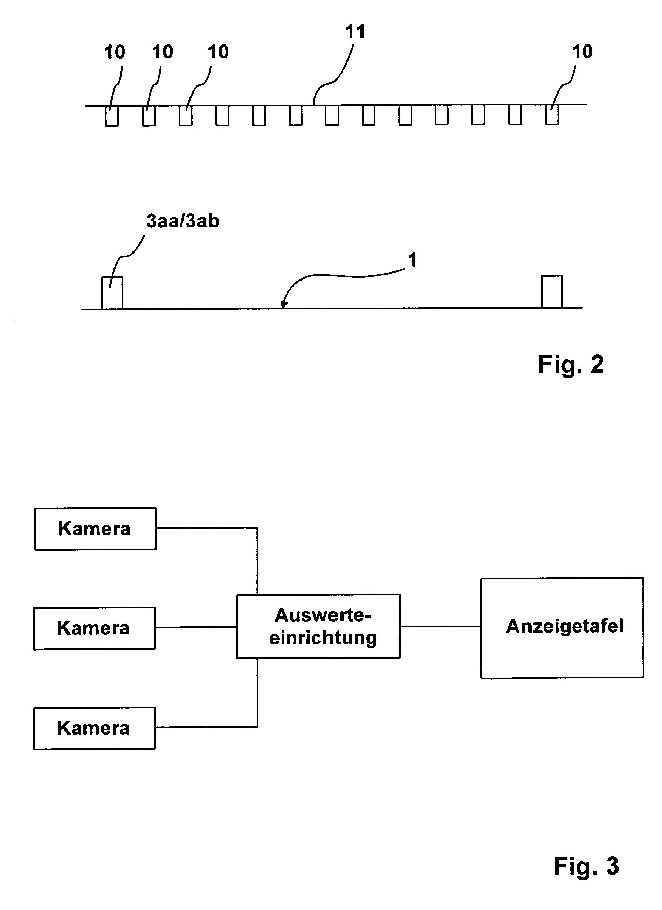

Gemäß Figur 1 und Figur 2 ist das mit 1 bezeichnete Spielfeld in eine Vielzahl von Sektoren 2 unterteilt, wobei der Torraum 3 ebenfalls noch einmal in zwei Sektoren 3aa, 3ab unterteilt ist. Über dem Spielfeld befindet sich - wie sich dies aus Figur 2 ergibt - eine Vielzahl von Kameras 10, wobei eine jede Kamera 10 einem Sektor 2 oder 3 (3aa, 3ab) zugeordnet ist. Die Kameras 10 sind hierbei schwenkbar an einer Stellage 11 angeordnet, so dass ein Spielelement 20, beispielsweise der Ball verfolgt wird, der aus dem Sektor 2.2.3 in Richtung des Sektors 2.1.3 befördert wird, um danach in den Sektor 3aa (Torraum) zu gelangen und von der Auswerteeinrichtung der bestimmte Sektor 2.1.3 ermittelt wird, von dem aus schlussendlich der Ball nach einem Richtungswechsel bei der Bewegung aus dem Sektor 2.2.3 in den Torraum 3 befördert worden ist. Die Ermittlung des Bewegungsverlaufes oder des Weges des Balles 20 von dem Sektor 2.2.3 über den Sektor 2.1.3 bis in den Sektor 3aa erfolgt zum einen über die unmittelbar über dem entsprechenden Sektor angeordnete Kamera 10 als auch durch die entsprechend benachbarten Kameras, die den unmittelbar benachbarten Sektoren zugeordnet sind. Denn diese Kameras in den benachbarten Sektoren sind in der Lage, auch eine vertikale Änderung der Bewegung zu ermitteln. Die Ermittlung einer solchen vertikalen Bewegung wäre beispielsweise dann erforderlich, wenn der Ball 20 aus dem Feld 2.2.3 auf geradem Wege in den Sektor 3ab gelangt, jedoch in dem Feld 2.1.3 lediglich aufschlägt und seine Richtung x, y beibehält, wie dies anhand des gestrichelten Pfeiles in Figur 1 dargestellt ist.

Die Auswerteeinrichtung erfasst den Bewegungsverlauf des Balles in Form von Vektoren in x-, y- und gegebenenfalls z-Richtung. Die Programmierung der Auswerteeinrichtung kann hierbei derart erfolgen, dass z. B. die letzten drei Bewegungsabläufe, beginnend und endend mit jeweils einer Richtungsänderung des Balles, gespeichert werden, um dann bei nachfolgenden Bewegungsabläufen den jeweils ersten Bewegungsablauf zu löschen. Bei Erreichen z. B. des Torraums dient dann der letzte Bewegungsablauf, gekennzeichnet durch einen Vektor dazu, zu ermitteln, wo die letzte Richtungsänderung des Balles stattgefunden hat, um die Anzeigetafel zu aktivieren.

## Patentansprüche

1. Verfahren zur Verfolgung eines Spielelementes (20), z. B. eines Balles oder eines Pucks, auf einem Spielfeld (1) mit Hilfe mehrerer das Spielfeld (1) in seiner Gesamtheit erfassenden Kameras (10), wobei durch mindestens eine Kamera (10) mindestens ein bestimmter Sektor (2) des Spielfeldes (1) erfassbar ist, wobei eine Auswerteeinrichtung vorgesehen ist, wobei die Auswerteeinrichtung eine Erkennungseinrichtung zur Erkennung des Spielelementes (20) durch die Kameras (10) aufweist, wobei durch die Auswerteeinrichtung der Weg des Spielelementes (20) innerhalb des von einer Kamera (10) betrachteten Sektors (2) oder der von mehreren Kameras (10) betrachteten mehreren Sektoren ermittelt wird und diese Sektoren gespeichert werden, wobei dann, wenn das Spielelement (20) auf einen oder mehrere bestimmte von einer Kamera oder mehreren Kameras (10) erfasste und definierte Zielsektoren trifft, durch die Auswerteeinheit der Sektor des Spielelementes (20) ermittelt wird, an dem das Spielelement (20) auf seinem Weg vor Erreichen des Zielsektors eine Richtungsänderung erfahren hat, wobei dann durch die Auswerteeinheit ein Signal an eine optische und/oder akustische Anzeigeeinrichtung übermittelt wird.

2. Verfahren nach Anspruch 1,
**dadurch gekennzeichnet,**
**dass** der Sektor (2) der letzten Richtungsänderung des Spielelementes (20) vor Erreichen des Zielsektors ermittelt wird.

3. Verfahren nach einem der voranstehenden Ansprüche,
**dadurch gekennzeichnet,**
**dass** die von den Kameras (10) betrachteten Sektoren (2) des Spielfeldes (1) einander überlappen.

4. Verfahren nach einem oder mehreren der voranstehenden Ansprüche,
**dadurch gekennzeichnet,**
**dass** die zu einem bestimmten Sektor (2) benachbarte Kamera (10) das Spielelement (10) zusätzlich zu der diesem bestimmten Sektor zugeordneten Kamera (11) erfasst.

5. Vorrichtung zur Durchführung des Verfahrens gemäß einem oder mehreren der voranstehenden Ansprüche,
**gekennzeichnet durch**
eine Mehrzahl von über dem Spielfeld (1) angeordneten Kameras (10), wobei **durch** die Mehrzahl der Kameras (10) das gesamte Spielfeld (1) erfassbar ist, eine Auswerteeinrichtung, die mit den Kameras (10) in Verbindung steht, sowie eine optische und/oder akustische Anzeigeeinrichtung, die mit der Auswerteeinrichtung in Verbindung steht.

6. Vorrichtung nach Anspruch 5,
**dadurch gekennzeichnet,**
**dass** die Kameras (10) schwenkbar sind.
